# EUROPÄISCHE PATENTSCHRIFT

(11) **EP 1 106 909 B1**
(45) Veröffentlichungstag und Bekanntmachung des Hinweises auf die Patenterteilung: **28.12.2005**
(21) Anmeldenummer: 00126735.0
(22) Anmeldetag: 06.12.2000
(51) Int. Cl.: F21S 8/12, F21V 5/00, F21V 15/04, F21V 17/00, G02B 6/00, B60Q 1/00

(54) **Scheinwerfereinheit für Fahrzeuge**
Vehicle headlamp unit
Ensemble projecteur pour véhicules

(30) Priorität: 07.06.2000 DE 10028282; 08.12.1999 DE 19959035
(43) Veröffentlichungstag der Anmeldung: 13.06.2001
(73) Patentinhaber: Hella KGaA Hueck & Co., 59552 Lippstadt (DE)
(72) Erfinder: Eichhorn, Karsten, Dr., 59320 Ennigerloh (DE); Wördenweber, Burkhard, Dr., 59555 Lippstadt (DE); Lachmayer, Roland, Dr., 59581 Warstein (DE); Korff, Detlef, 59557 Lippstadt (DE)

(56) Entgegenhaltungen:
- EP-A- 0 952 389
- US-A- 4 389 698
- US-A- 4 868 718

## Beschreibung

Die Erfindung betrifft eine Scheinwerfereinheit für Fahrzeuge mit einem eine Lichtquelle und einen Reflektor aufweisenden Lichtmodul und mit einem nachgeordneten Lichtauskoppelelement zur Erzeugung einer vorgegebenen Lichtverteilung.

Aus der DE 43 13 914 A1 ist eine Scheinwerfereinheit für Fahrzeuge bekannt, die ein Gehäuse aufweist, in dem eine Mehrzahl von Lichtauskoppelelementen nebeneinander angeordnet sind. Die Lichtauskoppelelemente dienen jeweils zur Erzeugung einer vorgegebenen Lichtverteilung. Die Lichtauskoppelelemente sind jeweils über einen Lichtleiter mit einem Lichtmodul verbunden, das eine Lichtquelle und einen Reflektor aufweist. Bei der bekannten Scheinwerfereinheit sind keine Maßnahmen vorgesehen, damit das Lichtauskoppelelement robust und gegenüber äußeren Umwelteinflüssen widerstandsfähig ausgebildet ist.

US-A-4868718 offenbart eine Schweinwerfereinheit für Fahrzeuge mit einer Lichtquelle und mit einem separat nachgeordneten Lichtauskoppelelement.

Aufgabe der vorliegenden Erfindung ist es daher, eine Scheinwerfereinheit für Fahrzeuge derart weiterzubilden, dass die Scheinwerfereinheit einen robusten und kompakten Aufbau aufweist, wobei sie sich gegenüber äußeren Umwelteinflüssen widerstandsfähig zeigt.

Zur Lösung dieser Aufgabe ist die Erfindung in Verbindung mit dem Oberbegriff des Patentanspruchs 1 dadurch gekennzeichnet, dass das Lichtauskoppelelement in einem ausschließlich die Lichtaustrittsfläche desselben freilegenden Gehäuse eingefasst ist, wobei Seitenwandungen des Gehäuses unmittelbar auf sich an die Lichtaustrittsfläche anschließenden Mantelflächen des Lichtauskoppelelementes anliegen und wobei eine vordere Kontur der Seitenwandungen zu dem Verlauf eines Randes der Lichtaustrittsfläche korrespondiert.

Der besondere Vorteil der Erfindung besteht darin, dass durch das im Bereich von seitlichen Flächen des Lichtauskoppelelementes unmittelbar anliegenden Gehäusewandungen eine dichte und sichere Befestigung des Lichtauskoppelelementes gewährleistet ist. Grundgedanke der Erfindung ist es, eine hermetische Abdichtung der seitlichen und rückwärtigen Flächen des Lichtauskoppelelementes zu der Umgebung zu erzielen, damit die Gefahr der Bildung eines feuchten Belages an denselben Flächen des Lichtauskoppelelementes weitgehend ausgeschlossen ist. Auf diese Weise kann sicher eine unerwünschte Beeinflussung der Reflexionseigenschaften der Wandungen des Lichtauskoppelelementes vermieden werden.

Nach einer besonderen Ausführungsform der Erfindung ist das Gehäuse einstückig und tunnelförmig mit einer Durchgangsöffnung ausgebildet, so dass die Gehäusewandungen das Lichtauskoppelelement dichtend umgreift und vor äu-βeren Umgebungseinflüssen schützt. Vorteilhaft ist die Scheinwerfereinheit hierdurch kompakt und einfach herstellbar aufgebaut.

Nach einer Weiterbildung der Erfindung ist das Gehäuse in einem mit einem Karosserieteil verbindbaren U-förmigen Halteelement drehbar gelagert, so dass auf einfache Weise eine Ausrichtung der Lichteinheit um eine Drehachse gewährleistet ist. Vorteilhaft sind die Schenkel des U-förmigen Halteelementes federnd ausgebildet, so dass das Gehäuse bzw. eine Lichtauskoppelelement-Aufnahme rastend an dem Halteelement befestigbar ist.

Nach einer Weiterbildung der Erfindung ist in einem vorderen Randbereich zwischen dem Gehäuse einerseits und angrenzenden Mantelflächen des Lichtauskoppelelementes eine durchgängige Dichtung vorgesehen, die einen langzeitstabilen dichten Sitz des Lichtauskoppelelementes in dem Gehäuse gewährleistet.

Nach einer Weiterbildung der Erfindung ist die Dichtung aus einem gummielastischen Material hergestellt, das sich an die Form des Lichtauskoppelelementes anschmiegen kann.

Nach einer Weiterbildung der Erfindung ist die Dichtung an einer Innenseite des Gehäuses angespritzt, so dass durch Einsetzen des Lichtauskoppelelementes in die Öffnung des Gehäuses ein sicherer Sitz desselben gewährleistet ist.

Weitere Vorteile der Erfindung ergeben sich aus den weiteren Unteransprüchen.

Ein Ausführungsbeispiele der Erfindung wird nachfolgend anhand der Zeichnungen näher erläutert.

Es zeigen:
- Figur 1: eine schematische Seitenansicht einer Scheinwerfereinheit nach einem ersten Ausführungsbeispiel,
- Figur 2: eine Seitenansicht einer Scheinwerfereinheit nach einem zweiten Ausführungsbeispiel,
- Figur 3: eine Vorderansicht der Scheinwerfereinheit gemäß Figur 2,
- Figur 4: ein Längsschnitt durch eine Scheinwerfereinheit entlang der Linie IV-IV gemäß Figur 3 und
- Figur 5: einen Längsschnitt entlang der Linie IV-IV gemäß Figur 3, in der ausschließlich eine Lichtauskoppelelement-Aufnahme und eine zwischen derselben und einer Mantelfläche des Lichtauskoppelelementes anliegenden Dichtung dargestellt ist.

Eine Scheinwerfereinheit für Kraftfahrzeuge besteht im wesentlichen aus einem Lichtmodul 1, das mittels eines Lichtleiters 2 mit einem Lichtauskoppelelement 3 verbunden ist. Das Lichtmodul 1 weist eine Lichtquelle 4 auf, die in einem Brennpunkt eines ellipsoidförmigen Reflektors 5 angeordnet ist. Das durch die Lichtquelle 4 erzeugte Licht wird durch den Reflektor 5 so auf eine Lichteintrittsfläche des Lichtleiters 2 fokussiert, dass es in demselben übertragen, an einem anderen Ende 6 desselben in das Lichtauskoppelelement 3 eingeprägt wird und dann durch eine Lichtaustrittsfläche 7 des Lichtauskoppelelementes 3 derart abgestrahlt wird, dass eine gewünschte Lichtverteilung erzeugt wird.

Das Lichtauskoppelelement 3 gemäß dem Ausführungsbeispiel dient zur Erzeugung einer breit gestreuten Lichtverteilung, beispielsweise eines Nebellichtes. Es weist zwei parallele Seitenwandungen 8 auf, die gegenüberliegend über in Lichtausbreitungsrichtung auseinanderlaufende Querwandungen 9 miteinander verbunden sind. Da die Querwandungen 9 rechteckförmig ausgebildet sind, ist das Lichtauskoppelelement im Querschnitt rechteckförmig ausgebildet. Die Lichtaustrittsfläche 7 ist in einer Ebene senkrecht zu den Seitenwandungen 8 konvexförmig ausgebildet.

Zum Schutz vor mechanischen Beanspruchungen ist das Lichtauskoppelelement 3 in einem an die Form desselben angepaßten Gehäuse 10 eingefaßt, das das Lichtauskoppelelement 3 durchgehend umgibt. Lediglich die Lichtaustrittsfläche 7 des Lichtauskoppelelementes 3 und der rückwärtige Anschlußteil an den Lichtleiter 2 sind freigelegt.

Zur Verhinderung des Eindringens von Feuchtigkeit in das Gehäuse 10 ist eine Dichtung 11 vorgesehen, die sich als umlaufende Dichtung bündig am vorderen Rand des Gehäuses 10 zwischen demselben und dem Lichtauskoppelelement 3 erstreckt. Die Dichtung 11 besteht aus einem gummielastischen Material, das an einer Innenseite des Gehäuses 10 angespritzt ist, vorzugsweise nach einem Zweikomponenten-Spritzgießverfahren. Hierdurch wird eine ortsfeste und lagesichere Anordnung der Dichtung 11 ermöglicht, die das Einsetzen des Lichtauskoppelelementes 3 in das Gehäuse 10 vereinfacht.

In einem rückwärtigen Bereich des Lichtauskoppelelementes 3, in dem das Lichtauskoppelelement 3 in einen zylindrischen Teil übergeht, ist eine weitere Dichtung als Runddichtung 12 ausgebildet, die zwischen der Innenseite des Gehäuses 10 und dem Lichtauskoppelelement 3 angeordnet ist. Sie erstreckt sich kreisförmig um das Lichtauskoppelelement 3 und fördert eine zentrierte Lage des Lichtauskoppelelementes 3 innerhalb des Gehäuses 10. Die Runddichtung 12 ist, wie die Dichtung 11, an der Innenseite des Gehäuses 10 angespritzt.

Das Gehäuse 10 ist in einem topfförmigen Gehäuseaufnahme 13 gelagert, die einen Stutzen 14 aufweist, der rastend mit dem Ende 6 des Lichtleiters 2 verbunden sein kann. Die Gehäuseaufnahme 13 weist zwei gegenüberliegende Rastarme 15 auf, die in einem Verbindungsbereich 16 in nicht dargestellte Ausnehmungen der Querwandungen 9 eingreifen und unter Bildung einer radialen Kraftkomponente gegen die gegenüberliegenden Querwandungen 9 drücken. Hierdurch wird eine selbstrastende Halterung des Gehäuses 10 in der Gehäuseaufnahme 13 erzielt. Das Lichtauskoppelelement 3 ist auf diese Weise mechanisch geschützt und kann aufgrund der einfachen geometrischen Ausbildung (Rechteckform) der Gehäuseaufnahme 13 auf einfache Weise in einer Karosserieöffnung eines Kraftfahrzeugs befestigt werden. Das Lichtauskoppelelement 3 weist daher einen kompakten und robusten Aufbau auf, wobei die Gehäuseaufnahme 13 zusätzlich als Pufferung gegenüber unerwünschten Stößen dient.

In einem rückwärtigen Bereich des Stutzens 14 ist dieser über eine weitere Runddichtung 12' gegenüber dem Lichtleiter 2 abgedichtet, so dass von der Rückseite her keine Feuchtigkeit in das Gehäuse 10 bzw. in die Gehäuseaufnahme 13 eindringen kann.

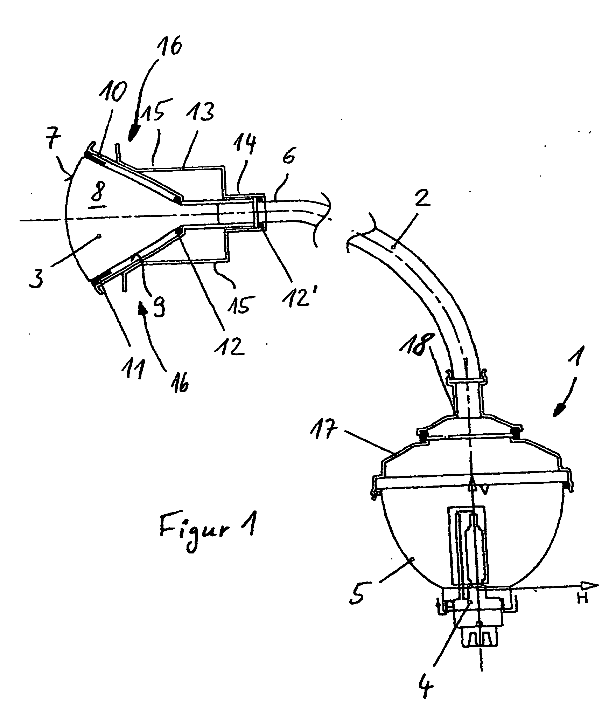

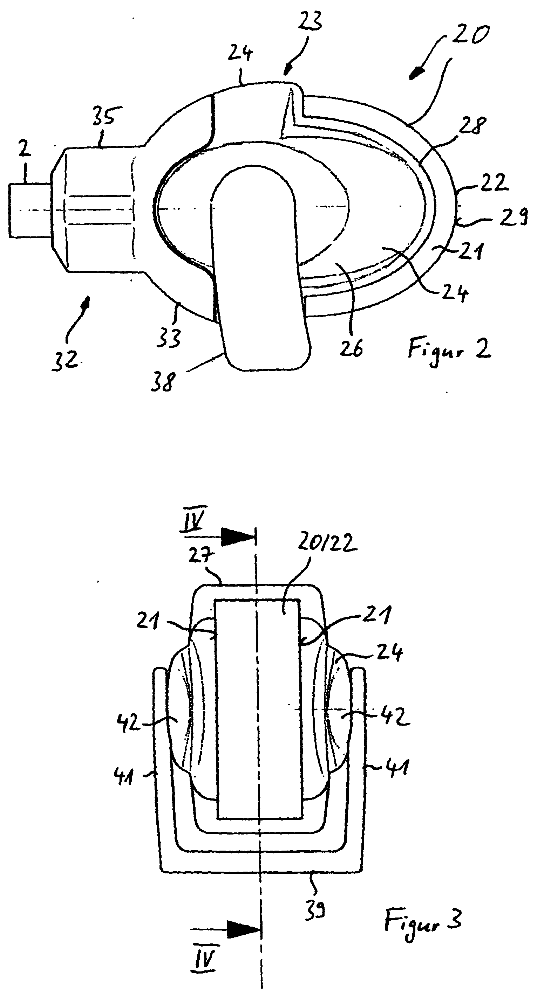

Wie aus der Figur 1 zu ersehen ist, weist das Lichtmodul 1 ein Gehäuse 17 auf, das mit einer Lichtleiteraufnahme 18 verbunden ist. Der Lichtleiter 2 ist als flexibler Lichtleiter 2 ausgebildet.

Nach einer alternativen Ausführungsform kann der Lichtleiter 2 auch starr und geradlinig ausgebildet sein, so dass die Lichtleiteraufnahme 18 bzw. das Gehäuse 17 einstückig mit der Gehäuseaufnahme 13 verbunden sein kann. Für diesen Fall können die Runddichtungen 12, 12' entfallen. Das gleiche gilt für eine Ausführungsform bei der das Lichtmodul 1 unmittelbar an das Lichtauskoppelelement 3 unter Weglassung des Lichtleiters 2 sich anschließt. Das Lichtauskoppelelement 3 besteht aus einem transparenten Material, vorzugsweise aus Glas oder PMMA, wobei es an den Rückseiten reflektierend bedampft ist.

Alternativ kann das Gehäuse 10 auch mittels einer Schraubverbindung innerhalb der Gehäuseaufnahme 13 gehalten sein. Sowohl das Gehäuse 10 als auch die Gehäuseaufnahme 13 bestehen aus einem relativ steifen, nicht transparenten Kunststoffmaterial.

Die erfindungsgemäße Scheinwerfereinheit eignet sich vorzugsweise als Zusatzscheinwerfer für Kraftfahrzeuge, die nachträglich an der Karosserie, vorzugsweise in einer Karosserieöffnung, angebracht werden.

Durch die einstückige Ausbildung der Gehäuseaufnahme 13 in Verbindung mit der Lichtleiteraufnahme 18 und dem Gehäuse 17 des Lichtmoduls 1 kann vorteilhaft der Aufwand für die Erlangung der Dichtigkeit des Lichtauskoppelelementes 3 reduziert werden.

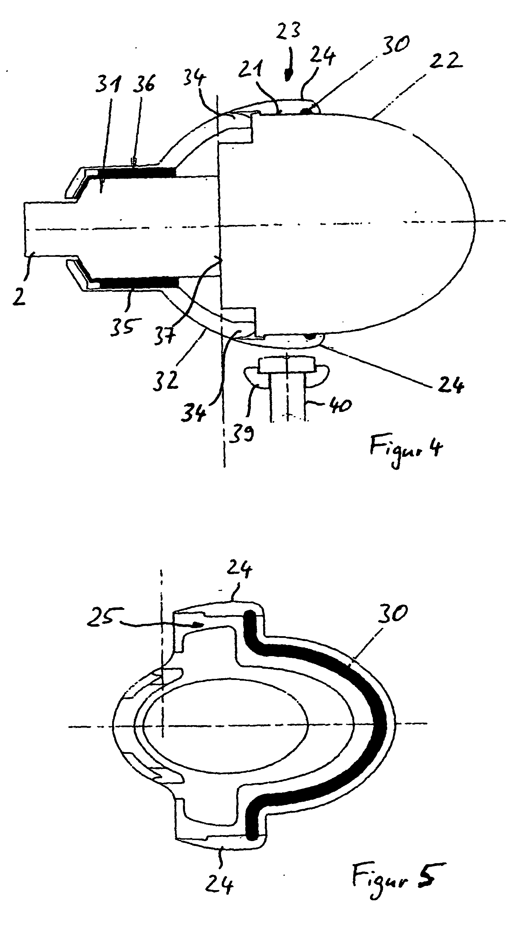

Nach einem weiteren Ausführungsbeispiel der Scheinwerfereinheit gemäß Figur 2 bis Figur 5 weist ein Lichtauskoppelelement 20 eine Nebellichtfunktion auf. Das Lichtauskoppelelement 20 weist zwei gegenüberliegende parallele Mantelflächen 21 auf, an deren Innenseite eine Totalreflexion der über den Lichtleiter 2 eingekoppelten Lichtstrahlen auftritt, bevor sie durch eine bogenförmige Lichtaustrittsfläche 22 des Lichtauskoppelelementes 20 dasselbe verlassen. Die bogenförmige Lichtaustrittsfläche 22 geht in einem hinteren Bereich 23 des Lichtauskoppelelementes 20 in eine gerade Fläche über, die damit gleichfalls als Mantelfläche 21 bezeichnet wird.

Das Lichtauskoppelelement 20 ist in einem einstückigen Gehäuse 24 eingefasst, das die Mantelflächen 21 des Lichtauskoppelelementes 20 dichtend umgreift. Das Gehäuse 24 ist als tunnelförmige Lichtauskoppelelement-Aufnahme ausgebildet mit einer Durchgangsöffnung 25 zur Aufnahme des Lichtauskoppelelementes 20. Die Lichtauskoppelelement-Aufnahme 24 weist lange und kurze Seitenwandungen 26 und 27 auf, die flächig auf den Mantelflächen 21 des Lichtauskoppelelementes 20 anliegen. Dabei decken die langen und kurzen Seitenwandungen 26, 27 im Wesentlichen die ebenen Mantelflächen 21 des Lichtauskoppelelementes 20 ab. Eine vordere Kontur 28 der langen und kurzen Seitenwandungen 26, 27 korrespondiert zu einem Rand 29 der Lichtaustrittsfläche 22 des Lichtauskoppelelementes 20. Auf diese Weise wird mit Ausnahme der Lichtaustrittsfläche die gesamte Oberfläche des Lichtauskoppelelementes 20 dichtend und schützend abgedeckt.

Um die Dichtwirkung zu erhöhen, ist im Bereich der vorderen Kontur 28 der Seitenwandungen 26, 27 eine umlaufende Dichtung 30 vorgesehen, die zwischen den Seitenwandungen 26, 27 einerseits und den Mantelflächen 21 des Lichtauskoppelelementes 20 andererseits zusammendrückbar verläuft.

Zur positionsgenauen lichttechnischen Ankopplung des Lichtauskoppelelementes 20 mit einem zylinderförmigen Ende 31 des Lichtleiters 2 ist eine Lichtleiteraufnahme 32 vorgesehen, die auf einer dem Lichtauskoppelelementes 20 zugewandten Seite ein C-förmiges Befestigungselement 33 aufweist, das formschlüssig bzw. klemmend an einer rückwärtigen Seite der Lichtauskoppelelement-Aufnahme 24 befestigt ist. Zu diesem Zweck greift ein umlaufender Rand 34 des C-förmigen Befestigungselementes 33 zum einen unter Anlage an eine Innenseite der Lichtauskoppelelement-Aufnahme 24 und andererseits unter stumpfer Anlage an einer Rückseite des Lichtauskoppelelementes 20 in den rückwärtigen Bereich der Durchgangsöffnung 25 ein.

Um einen dichten und festen Sitz des zylinderförmigen Endes 31 in der Lichtleiteraufnahme 32 zu gewährleisten, weist diese ein hohlzylinderförmiges Ansatzstück 35 auf, in dem das zylinderförmige Ende mittels einer die Umfangsfläche derselben umgreifenden Hülse 36 klemmend gehalten ist. Die Hülse 36 kann aus einem flexiblen Material hergestellt sein.

Das zylinderförmige Ende 31 ist in der Lichtleiteraufnahme 32 derart gelagert, dass eine Stirnfläche 37 des zylinderförmigen Endes 31 flächig an einem rückseitigen Ende des Lichtauskoppelelementes 20 anliegt.

Zur Befestigung der Lichteinheit an einem nicht dargestellten Karosserieteil des Kraftfahrzeuges ist ein U-förmiges Halteelement 38 vorgesehen, das in einem Scheitelbereich 39 mittels einer Schraube 40 an dem Karosserieteil befestigbar ist. Das Halteelement 38 weist gegenüberliegende federnde Schenkel 41 mit Öffnungen auf, die rastend mit Ausbuchtungen 42 an den langen Seitenwandungen 26 der Lichtauskoppelelement-Aufnahme 24 verbunden sind. Die Verbindungslinie der Ausbuchtungen 42 bzw. der Öffnungen der Schenkelenden 41 bildet eine Drehachse, die senkrecht zu der optischen Achse und dieselbe schneidend angeordnet ist. Vorzugsweise verläuft die Drehachse in horizontaler Richtung, so dass das Gehäuse 24 mit dem Lichtauskoppelelement 20 in der Höhe verstellbar ist.

Die Lichtaustrittsfläche 22 des Lichtauskoppelelementes 20 kann zur Vermeidung von Abrasion eine Beschichtung aufweisen. Die Beschichtung kann zum einen durch Anspritzen auf die Lichtaustrittsfläche 22 oder durch Aufbringen einer Folie erzeugt werden.

## Patentansprüche

1. Scheinwerfereinheit für Fahrzeuge
- mit einem eine Lichtquelle (4) und einen Reflektor (5) aufweisenden Lichtmodul (1) und
- mit einem nachgeordneten Lichtauskoppelelement (3, 20) zur Erzeugung einer vorgegebenen Lichtverteilung,
**dadurch gekennzeichnet, dass** das Lichtauskoppelelement (3, 20) in einem ausschließlich die Lichtaustrittsfläche (7, 22) desselben freilegenden Gehäuse (10, 24) eingefasst ist, wobei Seitenwandungen (26, 27) des Gehäuses (10) unmittelbar auf sich an die Lichtaustrittsfläche (22) anschließenden Mantelflächen (21) des Lichtauskoppelelementes (3, 20) anliegen und wobei eine vordere Kontur (28) der Seitenwandungen (26, 27) zu dem Verlauf eines Randes (29) der Lichtaustrittsfläche (22) korrespondiert.

2. Scheinwerfereinheit nach Anspruch 1, **dadurch gekennzeichnet, dass** das Gehäuse (10) eine einstückig ausgebildete und das Lichtauskoppelelement (20) umschließende Lichtauskoppelelement-Aufnahme (24) aufweist mit einer Durchgangsöffnung (25), in der das Lichtauskoppelelement (20) formschlüssig gehalten ist.

3. Scheinwerfereinheit nach Anspruch 1 oder 2, **dadurch gekennzeichnet, dass** die Lichtauskoppelelement-Aufnahme (24) zumindest an gegenüberliegenden Seitenwandungen (26) mittels eines U-förmigen Halteelementes (38) drehbar an einem Karosserieteil gehaltert ist.

4. Scheinwerfereinheit nach Anspruch 3, **dadurch gekennzeichnet, dass** das U-förmige Halteelement (38) gegenüberliegende federnde Schenkel (41) aufweist, die klemmend an der Lichtauskoppelelement-Aufnahme (24) angeordnet sind.

5. Scheinwerfereinheit nach einem der Ansprüche 1 bis 4, **dadurch gekennzeichnet, dass** eine Rückseite des Lichtauskoppelelementes (20) unmittelbar an einer Stirnfläche (37) eines Lichtleiters (2) anliegt, wobei ein zylinderförmiges Ende (31) des Lichtleiters (2) in einer Hülse (36) gelagert ist, die klemmend in einem hohlzylinderförmigen Ansatzstück (35) einer Lichtleiteraufnahme (32) positioniert ist.

6. Scheinwerfereinheit nach einem der Ansprüche 1 bis 5, **dadurch gekennzeichnet, dass** die Lichtleiteraufnahme (32) auf einer dem Lichtauskoppelelement (20) zugewandten Seite ein im Längsschnitt C-förmiges Befestigungselement (33) aufweist, das formschlüssig mit der Lichtauskoppelelement-Aufnahme (24) verbunden ist.

7. Scheinwerfereinheit nach einem der Ansprüche 1 bis 6, **dadurch gekennzeichnet, dass** in einem der vorderen Kontur (28) der Seitenwandungen (26, 27) nahen Bereich eine Dichtung (30) zwischen dem Lichtauskoppelelement (20) und der Lichtauskoppelelement-Aufnahme (24) angeordnet ist.

8. Scheinwerfereinheit nach Anspruch 1 oder 7, **dadurch gekennzeichnet, dass** die Dichtung (11) aus einem gummielastischen Material besteht.

9. Scheinwerfereinheit nach einem der Ansprüche 1 bis 8, **dadurch gekennzeichnet, dass** die Dichtung (11, 12) an einer Innenseite des Gehäuses (10) angespritzt ist.

10. Scheinwerfereinheit nach einem der Ansprüche 1 bis 9, **dadurch gekennzeichnet, dass** das Gehäuse (10) selbstrastend in der Gehäuseaufnahme (13) gehalten ist.

11. Scheinwerfereinheit nach einem der Ansprüche 1 bis 10, **dadurch gekennzeichnet, dass** eine weitere Dichtung (12, 12') an einer der Lichtaustrittsfläche (7) abgewandten Seite angeordnet ist.

12. Scheinwerfereinheit nach einem der Ansprüche 1 bis 11, **dadurch gekennzeichnet, dass** ein Lichtleiter (2) vorgesehen ist, der mittels einer Rastverbindung zum einen mit der Gehäuseaufnahme (13) und zum anderen mit dem Lichtmodul (1) verbunden ist.

13. Scheinwerfereinheit nach einem der Ansprüche 1 bis 12, **dadurch gekennzeichnet, dass** der Lichtleiter (2) als starres Lichtauskoppelelement ausgebildet ist und das die Gehäuseaufnahme (13) einstückig mit einem Gehäuse (17) des Lichtmoduls (1) und/oder mit einer Lichtleiteraufnahme (18) des Lichtmoduls (1) verbunden ist.

## Claims

1. Vehicle Headlamp Unit
• comprising a light module (1) with a light source (4) and a reflector (5) and
• a downstream light uncoupling element (3, 20) for generating a given light dispersion,
**characterised in that** the light uncoupling element (3, 20) is encased in a housing (10, 24) which exclusively lays bare its light emission surface (7, 22), and the side walls (26, 27) of the housing (10) abut directly casing surfaces (21) of the light uncoupling element (3, 20) adjacent the light emission surface (22), and a front contour (28) of the side walls (26, 27) corresponds with the line of an edge (29) of the light emission surface (22).

2. Headlight unit according to Claim 1, **characterised in that** the housing (10) comprises an integrated light uncoupling element accommodation (24) which encases the light uncoupling element (20) and which has a through passage (25) wherein the light uncoupling element (20) is positively held.

3. Headlamp unit according to Claim 1 or 2, **characterised in that** the light uncoupling element accommodation (24) is held at least on opposite side walls (26) by means of a U-shaped support element (38) so as to be rotary on a vehicle body section.

4. Headlamp unit according to Claim 3, **characterised in that** the U-shaped support element (38) comprises oppositely positioned sprung shanks (41) which are in a clamping manner arranged on the light uncoupling element accommodation (24).

5. Headlamp unit according to one of Claims 1 to 4, **characterised in that** a rear side of the light uncoupling element (20) directly abuts an end surface (37) of a light conductor (2), and a cylindrical end (31) of the light conductor (2) is mounted in a sleeve (36) which clamps light conductor accommodation (32) in a tubular attachment (35).

6. Headlamp unit according to one of Claims 1 to 5, **characterised in that** the light conductor accommodation (32) comprises on a side oriented towards the light uncoupling element (20) a longitudinally C-shaped fixing element (33) which is positively connected to the light uncoupling element accommodation (24).

7. Headlamp unit according to one of Claims 1 to 6, **characterised in that** in an area near the front contour (28) of the side walls (26, 27) is arranged a seal (30) between the light uncoupling element (20) and the light uncoupling element accommodation (24).

8. Headlamp unit according to Claim 1 or 7, **characterised in that** the seal (11) is composed of a rubber-elastic material.

9. Headlamp unit according to one of Claims 1 to 8, **characterised in that** the seal (11, 12) is sprayed onto an inside of the housing (10).

10. Headlight unit according to one of Claims 1 to 9, **characterised in that** the housing (10) is self-detentingly held in the housing accommodation (13).

11. Headlamp unit according to one of Claims 1 to 10, **characterised in that** a further seal (12, 12') is arranged at a side facing away from the light emission surface (7).

12. Headlamp unit according to one of Claims 1 to 11, **characterised in that** a light conductor (2) is provided which is by means of a detent connection joined on the one hand to the housing accommodation (13) and on the other hand to the light module (1).

13. Headlamp unit according to one of Claims 1 to 12, **characterised in that** the light conductor (2) is designed to be a rigid light uncoupling element, and the housing accommodation (13) is integrated with a housing (17) of the light module (1) and/or with a light conductor accommodation (18) of the light module (1).

## Revendications

1. Unité de phare pour véhicules, comportant
- un module lumineux (1) présentant une source lumineuse (4) et un réflecteur (5) et
- un élément de découplage de lumière (3, 20) monté en aval pour produire une répartition de lumière prédéterminée,
**caractérisée en ce que** l'élément de découplage de lumière (3, 20) est enchâssé dans un boîtier (10, 24) dégageant uniquement la surface de sortie de lumière (7, 22) de celui-ci, des parois latérales (26, 27) du boîtier (10) étant en appui directement sur des surfaces enveloppes (21), se raccordant à la surface de sortie de lumière (22), de l'élément de découplage de lumière (3, 20), et un contour antérieur (28) des parois latérales (26, 27) correspondant au tracé d'un bord (29) de la surface de sortie de lumière (22).

2. Unité de phare selon la revendication 1, **caractérisée en ce que** le boîtier (10) présente un logement (24) de l'élément de découplage de lumière réalisé d'un seul tenant et entourant l'élément de découplage de lumière (20) avec une ouverture de passage (25) dans laquelle l'élément de découplage de lumière (20) est maintenu par coopération de formes.

3. Unité de phare selon l'une ou l'autre des revendications 1 et 2, **caractérisée en ce que** le logement (24) de l'élément de découplage de lumière est supporté au moins au niveau de parois latérales (26) opposées de manière rotative sur une partie de carrosserie au moyen d'un élément de retenue (38) en forme de U.

4. Unité de phare selon la revendication 3, **caractérisée en ce que** l'élément de retenue (38) en forme de U présente des branches (41) opposées faisant effet de ressort qui sont agencées par serrage sur le logement (24) de l'élément de découplage de lumière.

5. Unité de phare selon l'une des revendications 1 à 4, **caractérisée en ce qu'**une face postérieure de l'élément de découplage de lumière (20) est en appui directement sur une face frontale (37) d'un guide de lumière (2), une extrémité (31) cylindrique du guide de lumière (2) étant montée dans une douille (36) qui est positionnée par serrage dans un embout (35) en forme de cylindre creux d'un logement de guide de lumière (32).

6. Unité de phare selon l'une des revendications 1 à 5, **caractérisée en ce que** le logement de guide de lumière (32) présente sur un coté tourné vers l'élément de découplage de lumière (20) un élément de fixation (33) en forme de C en coupe longitudinale, qui est relié par coopération de formes avec le logement (24) de l'élément de découplage de lumière.

7. Unité de phare selon l'une des revendications 1 à 6, **caractérisée en ce que** dans une région proche du contour antérieur (28) des parois latérales (26, 27), un joint d'étanchéité (30) est agencé entre l'élément de découplage de lumière (20) et le logement (24) de l'élément de découplage de lumière.

8. Unité de phare selon l'une ou l'autre des revendications 1 et 7, **caractérisée en ce que** le joint d'étanchéité (11) est en matériau présentant l'élasticité du caoutchouc.

9. Unité de phare selon l'une des revendications 1 à 8, **caractérisée en ce que** le joint d'étanchéité (11, 12) est injecté sur une face intérieure du boîtier (10).

10. Unité de phare selon l'une des revendications 1 à 9, **caractérisé en ce que** le boîtier (10) est maintenu par auto-enclenchement dans le logement de boîtier (13).

11. Unité de phare selon l'une des revendications 1 à 10, **caractérisée en ce qu'**un autre joint d'étanchéité (12, 12') est agencé sur une face détournée de la surface de sortie de lumière (7).

12. Unité de phare selon l'une des revendications 1 à 11, **caractérisée en ce qu'**il est prévu un guide de lumière (2) qui est relié d'une part au logement de boîtier (13) et d'autre part au module de lumière (1) au moyen d'une liaison par enclenchement.

13. Unité de phare selon l'une des revendications 1 à 12, **caractérisée en ce que** le guide de lumière (2) est réalisé sous forme d'élément de découplage de lumière rigide et **en ce que** le logement de boîtier (13) est relié d'un seul tenant à un boîtier (17) du module de lumière (1) et/ou à un logement (18) de guide de lumière du module de lumière (1).
